# FASCICULE DE BREVET EUROPEEN

(11) **EP 2 934 950 B1**
(45) Date de publication et mention de la délivrance du brevet: **08.02.2017**
(21) Numéro de dépôt: 13805359.0
(22) Date de dépôt: 13.12.2013
(51) Int. Cl.: B60R 11/00, B60R 11/02

(54) **SUPPORT D'ECRAN MULTIMEDIA NOTAMMENT POUR UNE PLANCHE DE BORD D'UN VEHICULE AUTOMOBILE**
MULTIMEDIA-BILDSCHIRM INSBESONDERE FÜR EIN ARMATURENBRETT EINES KRAFTFAHRZEUGES
MULTIMEDIA SCREEN SUPPORT ESPECIALLY FOR A DASHBOARD OF A MOTOR VEHICLE

(30) Priorité: 21.12.2012 FR 1262557
(43) Date de publication de la demande: 28.10.2015
(73) Titulaire: Renault S.A.S., 92100 Boulogne-Billancourt (FR)
(72) Inventeur: LE LEIZOUR, Alban, F-78580 Maule (FR); MARCEAU, Thierry, F-92500 Rueil Malmaison (FR); BERTRAND, Christophe, F-28210 Vacheresse Les Bones (FR)
(86) Numéro de dépôt international: PCT/EP2013/076509
(87) Numéro de publication internationale: WO 2014/095613

(56) Documents cités:
- WO-A1-02/085672
- FR-A1- 2 939 998

## Description

### Domaine de l'invention :

La présente invention concerne un support d'écran multimédia notamment pour une planche de bord d'un véhicule automobile. Par « support d'écran multimédia », on entend un support adapté à recevoir tout type d'appareil multimédia ayant typiquement un écran sur l'une de ces faces, cet écran étant par exemple tactile mais non exclusivement. Les dimensions d'un tel appareil sont par exemple celles d'une tablette tactile d'un format de 7 à 13 pouces ou celles d'un téléphone ou assistant personnel comportant un écran dont le format est typiquement compris entre 3 et 7 pouces. Le terme « écran multimédia » est un terme générique qui doit être compris de façon non limitative, étant entendu qu'un support adapté à recevoir un tel écran sera également adapté à recevoir d'autre objet au format proche, par exemple un bloc note, une feuille de route etc.

### Etat de la technique :

Les planches de bord de véhicules familiaux ou utilitaires sont parfois équipées d'accessoires permettant de maintenir des écrans multimédia, des blocs notes ou autres types objets de formes et dimensions analogues.

On connaît des supports de ce type qui sont déployables et rétractables dans un logement de la planche de bord. Lorsque l'objet à supporter a des dimensions correspondant à un écran de 10 pouces par exemple, ce qui correspond à une diagonale d'environ 25 cm, le support lui-même de l'écran présente des dimensions voisines, ce qui implique de prévoir un logement ayant un encombrement conséquent dans la planche de bord en vue d'escamoter le support. L'ouverture au moins du logement doit en effet pouvoir autoriser le passage du support. La profondeur du support doit également être importante pour recevoir le support en position escamotée ou rétractée. Hors la planche de bord d'un véhicule doit recevoir de multiples équipements qu'il n'est pas toujours aisé de faire tenir dans un espace donné. La planche de bord est également soumise à de nombreuses contraintes de visibilité et d'ergonomie. Ainsi on cherche à réduire l'encombrement du support d'écran multimédia. Ceci est vrai tant en position escamotée, pour gagner du volume dans le corps de la planche de bord, qu'en position déployée de l'écran multimédia, pour occulter le minimum de zone au devant de la planche de bord (où sont disposées des commandes ou équipement divers), ou devant la zone de visibilité du conducteur. On observe en outre que des supports disposés en partie haute de la planche de bord aggravent la perte de visibilité du conducteur, lorsqu'un écran de dimension importante (par exemple plus de 7 pouces) occulte une partie du champ de vision délimité par le pare-brise. La sécurité peut de ce fait être impactée par un écran empiétant exagérément dans le champ de vision du conducteur.

En outre les supports d'écran multimédia comportent des réglages très limités qui ne tiennent pas compte de la diversité des dimensions des écrans multimédias susceptibles d'être embarqués, allant des écrans de petites dimensions (par exemple de l'ordre de 3 à 7 pouces) à des écrans de plus grandes dimensions (par exemple de l'ordre de 7 à 13 pouces). Ces supports connus ne permettent pas en fonction de la taille de l'écran, de privilégier plutôt le champ de vision du conducteur ou de privilégier l'accès à des commandes ou accessoires alentours situés sur la planche de bord.

La publication WO02/085672 A1 divulgue un support d'écran multimédia d'après le préambule de la revendication 1.

### But de l'invention :

L'invention a pour but de pallier tout ou partie des inconvénients précédents en proposant un support d'écran multimédia notamment pour une planche de bord d'un véhicule automobile, ainsi qu'une planche de bord équipée d'un tel support qui soit particulièrement peu encombrant, notamment en position escamotée ou rétractée dans la planche de bord, et qui permette un réglage aisé pour positionner l'écran multimédia dans une position choisie par l'utilisateur, en fonction du gabarit de l'écran et des besoins de visibilité ou d'accès à des commandes diverses.

### Objet de l'invention :

A cet effet, l'invention a pour objet un support d'écran multimédia notamment pour une planche de bord d'un véhicule automobile, caractérisé en ce qu'il comprend un boitier dans lequel coulisse un chariot entre une position escamotée à l'intérieur du boitier et une position déployée à l'extérieur du boitier, caractérisé en ce que le chariot supporte un chevalet articulé à sa base entre une position couchée contre le chariot permettant l'escamotage du chariot et du chevalet dans le boitier, et une position relevée adaptée au maintien d'un écran multimédia en appui sur un rebord inférieur du chevalet, le rebord inférieur étant en outre déplaçable par rapport à la base du chevalet articulé sur le chariot, entre une position haute libérant de la place en dessous du chevalet, et une position basse apte à abaisser la position d'un écran multimédia, notamment pour limiter son dépassement au dessus du bord supérieur du chevalet.

Ainsi bien qu'offrant de multiples possibilités de réglages tenant compte des multiples formats d'écrans multimédias existants, le support peut être complètement escamoté dans un volume au format normalisé « 1DIN », principalement matérialisé par le boitier apte à recevoir le support. Le support selon l'invention offre en outre la possibilité d'ajuster la position du support et de l'écran ainsi maintenu, en fonction du choix de l'utilisateur, qui privilégiera plutôt la visibilité ou plutôt l'accès à des équipements adjacents sur la planche de bord, ou adoptera un équilibre satisfaisant entre ces contraintes.

Selon d'autres caractéristiques avantageuses de l'invention :
- le boitier est pourvu d'une ouverture au format normalisé « 1 DIN »,
- le chevalet a une face arrière reliée au chariot par une béquille apte à être déplacée entre une position de maintien relevée, et une position rangement escamotée entre le chariot et le chevalet en position couchée,
- le rebord inférieur comporte une platine sensiblement horizontale reliée à une partie supérieure du chevalet par des guides sensiblement verticaux coulissant dans des fenêtres conformées dans la partie supérieure, un système de verrouillage débrayable étant prévu pour maintenir le rebord inférieur dans sa position haute ou le libérer de celle-ci,

- le support comporte des cales latérales ayant la forme générale de deux ailettes formant saillie par rapport à une face avant du chevalet, ces cales étant reliées à une partie supérieure du chevalet par des moyens d'entrainement permettant un déplacement des cales entre une configuration écartée à distance du chevalet et une configuration rapprochée accolée contre les bords latéraux du chevalet, les moyens d'entrainement étant en outre conformés pour réaliser des déplacements combinés d'une cale par rapport à l'autre,
- les moyens d'entrainement comprennent un système à double pignons montés solidairement sur un axe rotatif porté par le chevalet, chaque pignon coopérant avec une crémaillère correspondante reliée rigidement à l'une ou l'autre des cales, le nombre de dents des pignons étant différents pour l'une et l'autre des crémaillères de sorte que le rapport R des distances parcourues par chacune des cales est différent de 1,
- le rapport R est compris entre 1,2 et 2, notamment R égal 1,5, le rapport étant considéré de la plus grande distance sur la plus petite distance parcourues par les cales,
- le support comprend une paroi pleine prolongeant le rebord inférieur vers le haut de façon sensiblement perpendiculaire à la platine, cette paroi pleine s'insérant dans le corps du chevalet lorsque le rebord inférieur est dans la position haute tandis qu'elle se découvre lorsque le rebord inférieur est dans la position basse.

L'invention a également pour objet une planche de bord d'un véhicule automobile caractérisé en ce qu'elle comprend un support d'écran multimédia ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente un support d'écran multimédia suivant l'invention, le chariot et le chevalet étant rangés en position escamotée dans le boitier,
- la figure 2 représente le support d'écran multimédia suivant l'invention, le chariot étant en position déployée à l'extérieur du boitier tandis que le chevalet est en position relevée,
- la figure 3 est une vue agrandie d'une partie arrière du chevalet, illustrant la zone de la béquille maintenant le chevalet en position relevée,
- la figure 4 représente le support d'écran multimédia de la figure 2, en situation d'utilisation classique de l'écran, le chariot étant en partie inséré dans le boitier tandis que le chevalet est en position relevée en butée contre le boitier, le rebord inférieur étant alors en position haute,
- la figure 5 est une vue analogue à la figure 5 dans laquelle le rebord inférieur du chevalet est en position basse,
- la figure 6 est une vue arrière du support de l'invention, illustrant les cales latérales dans une position écartée, et
- la figure 7 est une vue de la partie arrière du chevalet seul de l'invention, sans sa paroi arrière, illustrant plus précisément le mécanisme de guidage du rebord inférieur et le système de guidage / entrainement des cales latérales.

Dans le présent texte, on décrit un support d'écran multimédia destiné typiquement à équiper une planche de bord d'un véhicule automobile. Dans ce contexte, et sauf indication contraire, les notions « avant » et « arrière » sont utilisées en référence aux passagers avant du véhicule. Un partie « avant » sera tournée vers ces passagers, c'est-à-dire vers l'arrière du véhicule, tandis qu'une partie « arrière » sera tournée à l'opposé, vers l'avant du véhicule. On utilise également ci-après le repère classique XYZ d'un véhicule, dans lequel X désigne la direction longitudinale du véhicule, orientée vers l'arrière du véhicule, Y la direction transversale du véhicule, orientée vers la droite, et Z la direction verticale orientée vers le haut.

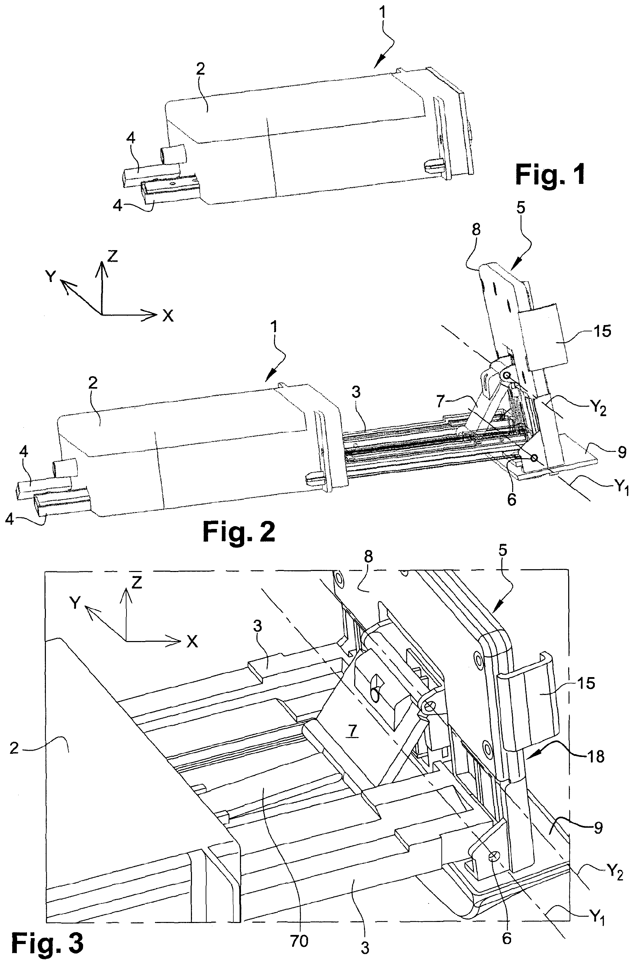

On a représenté à la figure 1 un support 1 d'écran multimédia suivant l'invention, notamment pour une planche de bord d'un véhicule automobile. La planche de bord et l'écran multimédia ne sont pas représentés. On comprendra que le terme « écran multimédia » est générique et s'étend à tous les types de dispositifs multimédia dont le format est compris entre au moins 3 pouces et 13 pouces, qu'il s'agisse de tablettes tactiles, de téléphones à écran tactile etc. Un tel support suivant l'invention est également adapté au maintien d'autre types d'objets, par exemple des bloc-notes. A la figure 1, le support est en situation de rangement, c'est-à-dire complètement escamoté à l'intérieur d'un boitier 2. L'ensemble du support suivant l'invention dans cette configuration escamotée est inscrit dans un volume au format normalisé « 1DIN ».

Le boitier 2 a la forme générale d'un parallélépipède. Celui-ci a un encombrement en façade qui s'inscrit entièrement dans un cadre au format « 1DIN ». De même dans cette configuration escamotée, l'ensemble du support a une dimension longitudinale suivant la direction X, qui correspond sensiblement à la dimension longitudinale des équipements classiques (autoradio ou équivalents) au format « 1DIN ». Ainsi le boitier 2 peut être reçu dans un logement de forme et de dimensions correspondantes prévu en façade d'une planche de bord d'un véhicule.

En référence aux figures 2 et 3, le support 1 comprend un chariot 3 monté coulissant suivant la direction longitudinale X, entre une position escamotée dans le boitier 2 (figure 1) et une position déployée à l'extérieur du boitier 2 (figures 2 et 3).

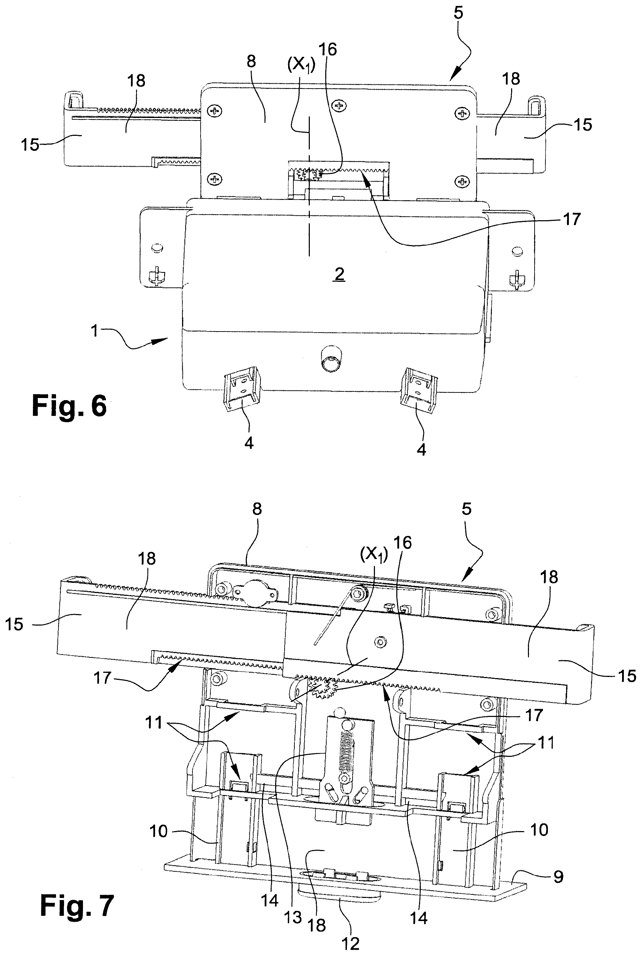

Dans l'exemple illustré, le chariot 3 est monté coulissant sur deux rails 4 parallèles traversant longitudinalement le boitier 2, dans une partie inférieure de celui-ci. Dans cet exemple, les rails 4 dépassent à l'arrière du boitier 2, pour permettre une portée maximale au chariot 3 en position déployée, tout en étant inclus dans le volume normalisé « 1DIN ». Dans une variante de réalisation, il est possible de les recouvrir par une partie du boitier. Comme on le voit à la figure 6, les rails 4 sont ici inclinés pour mieux positionner le chariot et rattraper le jeu latérale en Y.

Le chariot 3 supporte un chevalet 5 articulé à sa base autour d'un axe Y1 sensiblement parallèle à la direction transversale Y. Le chevalet à la forme d'un plateau servant d'appui arrière à un écran multimédia. Il est prolongé en partie basse par un rebord inférieur sur lequel repose l'écran multimédia comme on le verra ci-après. Le chevalet 5 est mobile autour de l'articulation 6 entre une position couchée contre le chariot 3 permettant l'escamotage du chariot 3 et du chevalet 5 dans le boitier 2, et une position relevée adaptée au maintien d'un écran multimédia en appui sur un rebord inférieur 6 du chevalet 5. La position couchée est sensiblement horizontale, c'est-à-dire parallèle aux plans XY, tandis que la position relevée du chevalet est sensiblement verticale ou légèrement inclinée vers l'arrière. A titre d'exemple non limitatif, un angle d'inclinaison de l'ordre de 10 à 20° est parfaitement adapté.

Le maintien du chevalet 5 dans la position verticale est assuré par une béquille 7 située à l'arrière du chevalet 5 Le chevalet 5 a une face arrière reliée au chariot 3 par la béquille 7 qui est apte à être déplacée entre une position de maintien relevée (figures 2 et 3), et une position rangement escamotée entre le chariot 3 et le chevalet 5 en position couchée. La béquille 7 comporte une première extrémité articulée sur la face arrière du chevalet 5, autour d'un axe Y2. Elle comporte également une seconde extrémité formant un pied coulissant sur le chariot 3 suivant la direction longitudinale X. Ce coulissement de la seconde extrémité le long du rail 3 conjugué à la rotation de la béquille 7 autour de l'articulation suivant Y2 permet de déplacer le chevalet 5 entre sa position couchée et sa position relevée. On a également prévu un système d'immobilisation du chevalet 5 en position relevée. Celui-ci est constitué d'une biellette 70 articulée sur le chariot 3 qui agit à la façon d'un levier (figure 3). Cette biellette 70 est articulée autour d'un axe parallèle à la direction transversale Y. Dès que la béquille 7 a atteint sa position relevée, la biellette 70 coopère par l'une de ses extrémités avec une empreinte correspondante conformée à la seconde extrémité de la béquille 7. La biellette 70 se place automatiquement dans cette position de blocage de la béquille 7 sous l'influence d'un moyen de rappel (non représenté) interposé entre la biellette 70 et le chariot 3.

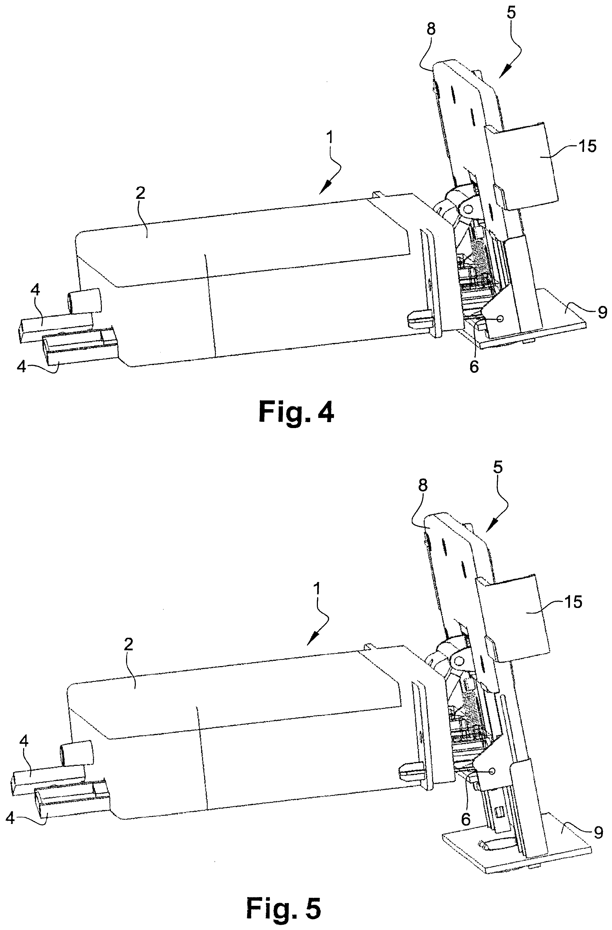

Le chevalet 5 comporte par ailleurs une partie supérieure 8 qui est directement articulée par sa base sur l'extrémité du chariot 3. Le chevalet comprend également un rebord inférieur 9 déplaçable par rapport à la partie supérieure et donc par rapport à la base du chevalet 5, entre une position haute illustré à la figure 4 libérant de la place en dessous du chevalet 5, et une position basse illustrée à la figure 5 apte à abaisser la position d'un écran multimédia, notamment pour limiter son dépassement au dessus du bord supérieur du chevalet 5.

Le rebord inférieur 9 comporte une platine sensiblement horizontale reliée à la partie supérieure du chevalet par des guides 10 sensiblement verticaux coulissant selon la direction sensiblement verticale dans des empreintes conformées dans la partie supérieure 8. Deux guides 10 longitudinaux et parallèles sont espacés suivant la direction transversale Y. Ils sont insérés dans des fenêtres 11 ménagées dans des parois ou rebord conformés sur la partie supérieure 8 du chevalet 5. Des fenêtres hautes et basses sont prévues pour assurer un maintien et un guidage adéquat du rebord inférieur quelle que soit sa position haute ou basse. Des butées sont prévues pour arrêter le coulissement du rebord inférieur 9 à une position basse déterminée. Le déplacement vers le bas du rebord inférieur 9 est assuré par sa gravité, dès lors qu'un système de verrouillage apte à maintenir ce rebord inférieur 9 en position haute a été débrayé, afin de libérer le rebord inférieur 9.

Le système de verrouillage est constitué d'un bouton poussoir 12 situé sur le rebord inférieur 9 et agencé de façon à recevoir une poussée manuelle vers le haut. Ce bouton poussoir 12 coopère avec un coulisseau 13 monté sur la partie supérieure 8 du chevalet 5 (dans une zone inférieure de celle-ci), lequel est relié aux guides 10 par des tirants 14 disposés de part et d'autre du coulisseau 13 et agencés suivant la direction transversale Y. Les extrémités des tirants 14 situés à l'opposé du coulisseau 13 sont aptes à pénétrer dans des orifices correspondant formés sur les guides 10 et constituent de ce fait des systèmes pêne-gâche, permettant le verrouillage des guides 10 par rapport à la partie supérieure 8 du chevalet 5 lorsque le rebord inférieur 9 est dans la position haute. On note que les extrémités des tirants 14 comportent une forme en pente, permettant un retrait automatique en dehors des orifices correspondant sous l'action d'une poussée vers le haut du rebord inférieur 9.

Le support comprend également des cales latérales 15 ayant la forme générale de deux ailettes formant saillie suivant la direction longitudinale X par rapport à une face avant du chevalet 5. Ces cales 15 sont reliées à la partie supérieure 8 du chevalet 5 par des moyens d'entrainement permettant un déplacement des cales entre une configuration écartée, illustrée aux figures 6 et 7 à distance du chevalet 5 et une configuration rapprochée, illustrée aux figures 2 à 5 accolée contre les bords latéraux du chevalet 5. Ces moyens d'entrainement sont en outre conformés pour réaliser des déplacements combinés d'une cale 15 par rapport à l'autre. Ces déplacements sont dissymétriques, de façon à permettre l'implantation d'un accessoire tel qu'un autre support de téléphone à proximité du support 1 d'écran multimédia de l'invention. Ainsi si cet autre support est situé d'un côté du support 1 selon l'invention, par exemple le côté gauche, il est avantageux que les cales de maintien 15 s'écartent par un déplacement plus petit de ce côté et par un déplacement plus grand de l'autre côté. Ainsi la zone d'accueil de l'écran multimédia est globalement décalée vers le côté opposé, par exemple le côté droit, où les contraintes d'encombrement sont moindres.

Ce déplacement dissymétrique est obtenu par un système à double pignons 16 montés solidairement sur un axe rotatif porté par la partie supérieure 8 du chevalet 5 (figures 6 et 7). La rotation est réalisé autour d'un axe X1 sensiblement parallèle à la direction longitudinale X. Ces deux pignons sont solidaires en rotation et forment une roue dentée à deux étages correspondant à des rapports de démultiplication distincts. Chaque pignon coopère avec une crémaillère 17 correspondante reliée rigidement à l'une ou l'autre des cales. Les crémaillères 17 sont conformées sur des bras 18 s'étendant sensiblement suivant la direction transversale Y (figures 6 et 7). Le rapport des distances parcourues par les deux cales latérales 15 est typiquement compris entre 1,2 et 2, par exemple 1,5 (rapport de la plus grande distance parcourue, par exemple par la cale 15 de droite, sur la plus petite distance parcourue, par exemple par la cale de gauche).

Le support 1 suivant l'invention comprend encore une paroi pleine 18 prolongeant le rebord inférieur 9 vers le haut de façon sensiblement perpendiculaire à la platine formant la face d'appui de l'écran (figures 3 et 7). Cette paroi pleine 18 s'insérant dans le corps de la partie supérieure 8 du chevalet 5 lorsque le rebord inférieur 9 est dans la position haute tandis qu'elle se découvre lorsque le rebord inférieur 9 est dans la position basse.

L'utilisation du support 1 s'effectue comme suit : partant d'une configuration rangée (figure 1), l'utilisateur accroche manuellement un élément de préhension agencé sur la façade du support, constitué par le dessous du rebord inférieur 9. L'utilisateur tire sur cet élément ce qui a pour effet de déplacer le chariot 3 jusqu'à la position déployée. L'utilisateur relève le chevalet 5 de sa position couchée jusqu'à sa position relevée. Un blocage est réalisé par le système de point dur prévu entre la béquille 7 et la biellette 70. L'utilisateur repousse le chariot 1 jusqu'à ce que le sommet de la béquille 7 coopère en butée avec le bord supérieur du boitier 2. Ensuite, l'utilisateur effectue les réglages souhaité, par exemple en abaissant le rebord inférieur 9 et/ou en écartant les cales latérales 15. Ces mouvements sont indépendant l'un de l'autre.

Le rangement du support 1 dans le boitier 2 s'effectue selon une séquence d'opérations inverse à celle qui vient d'être décrite. L'ensemble du chariot 3, du chevalet 5 (incluant le rebord inférieur 9 et ses cales latérales 15) s'escamote à l'intérieur du boitier 2. Un élément de parement et de préhension peut être rapporté et fixé sur la face inférieure du rebord inférieur 9.

Bien entendu, l'invention n'est pas limitée aux modes ou variantes de réalisation décrits précédemment et comprend tous les équivalents techniques de ces moyens.

## Revendications

1. Support d'écran multimédia notamment pour une planche de bord d'un véhicule automobile, comprenant un boitier (2) dans lequel coulisse un chariot (3) entre une position escamotée à l'intérieur du boitier (2) et une position déployée à l'extérieur du boitier (2), le chariot supporte un chevalet (5) articulé à sa base entre une position couchée contre le chariot (3) permettant l'escamotage du chariot (3) et du chevalet (5) dans le boitier (2), et une position relevée adaptée au maintien d'un écran multimédia en appui sur un rebord inférieur (9) du chevalet (5), **caractérisé en ce que** le rebord inférieur (9) étant en outre déplaçable par rapport à la base du chevalet (5) articulé sur le chariot (3), entre une position haute libérant de la place en dessous du chevalet (5), et une position basse apte à abaisser la position d'un écran multimédia, notamment pour limiter son dépassement au dessus du bord supérieur du chevalet (5).

2. Support d'écran multimédia selon la revendication 1, **caractérisé en ce que** le boitier (2) est pourvu d'une ouverture au format normalisé « 1 DIN ».

3. Support d'écran multimédia selon la revendication 1 ou 2, **caractérisé en ce que** le chevalet (5) a une face arrière reliée au chariot (3) par une béquille (7) apte à être déplacée entre une position de maintien relevée, et une position rangement escamotée entre le chariot (3) et le chevalet (5) en position couchée.

4. Support d'écran multimédia selon l'une quelconque des revendications 1 à 3, **caractérisé en ce que** le rebord inférieur (9) comporte une platine sensiblement horizontale reliée à une partie supérieure du chevalet (5) par des guides (10) sensiblement verticaux coulissant dans des fenêtres (11) conformées dans la partie supérieure (8), un système de verrouillage (12-14) débrayable étant prévu pour maintenir le rebord inférieur (9) dans sa position haute ou le libérer de celle-ci.

5. Support d'écran multimédia selon l'une quelconque des revendications 1 à 4, **caractérisé en ce qu'**il comporte des cales latérales (15) ayant la forme générale de deux ailettes formant saillie par rapport à une face avant du chevalet (5), ces cales (15) étant reliées à une partie supérieure (8) du chevalet (5) par des moyens d'entrainement (16, 17) permettant un déplacement des cales (15) entre une configuration écartée à distance du chevalet (5) et une configuration rapprochée accolée contre les bords latéraux du chevalet (5), les moyens d'entrainement (16, 17) étant en outre conformés pour réaliser des déplacements combinés d'une cale (15) par rapport à l'autre.

6. Support d'écran multimédia selon la revendication 5, **caractérisé en ce que** les moyens d'entraînement (16, 17) comprennent un système à double pignons (16) montés solidairement sur un axe rotatif (X1) porté par le chevalet (5), chaque pignon (16) coopérant avec une crémaillère (17) correspondante reliée rigidement à l'une ou l'autre des cales (15), le nombre de dents des pignons (16) étant différents pour l'une et l'autre des crémaillères (17) de sorte que le rapport (R) des distances parcourues par chacune des cales (15) est différent de 1.

7. Support d'écran multimédia selon la revendication 6, **caractérisé en ce que** le rapport R est compris entre 1,2 et 2, notamment R égal 1,5, le rapport étant considéré de la plus grande distance sur la plus petite distance parcourues par les cales (15).

8. Support d'écran multimédia selon l'une quelconque des revendications 4 à 7 précédentes, **caractérisé en ce qu'**il comprend une paroi pleine (18) prolongeant le rebord inférieur (9) vers le haut de façon sensiblement perpendiculaire à la platine, cette paroi pleine (18) s'insérant dans le corps du chevalet (5) lorsque le rebord inférieur (9) est dans la position haute tandis qu'elle se découvre lorsque le rebord inférieur (9) est dans la position basse.

9. Planche de bord d'un véhicule automobile **caractérisé en ce qu'**elle comprend un support (1) d'écran multimédia suivant l'une quelconque des revendications précédentes.

## Patentansprüche

1. Multimedia-Bildschirm-Träger, insbesondere für ein Kraftfahrzeug-Armaturenbrett, der ein Gehäuse (2) enthält, in dem ein Schlitten (3) zwischen einer ins Innere des Gehäuses (2) eingezogenen und einer nach außerhalb des Gehäuses (2) ausgefahrenen Stellung gleitet, der Schlitten einen Ständer (5) trägt, der an seiner Basis zwischen einer gegen den Schlitten (3) liegenden Stellung, die das Einziehen des Schlittens (3) und des Ständers (5) in das Gehäuse (2) ermöglicht, und einer angehobenen Stellung angelenkt ist, die für den Halt eines Multimedia-Bildschirms in Anlage auf einer unteren Randleiste (9) des Ständers (5) geeignet ist, **dadurch gekennzeichnet, dass** wobei die untere Randleiste (9) außerdem bezüglich der Basis des am Schlitten (3) angelenkten Ständers (5) zwischen einer oberen Stellung, die unter dem Ständer (5) Platz freigibt, und einer unteren Stellung verschiebbar ist, die die Stellung eines Multimedia-Bildschirms absenken kann, insbesondere, um sein Vorstehen über dem oberen Rand des Ständers (5) zu begrenzen.

2. Multimedia-Bildschirm-Träger nach Anspruch 1, **dadurch gekennzeichnet, dass** das Gehäuse (2) mit einer Öffnung im Standardformat "1DIN" versehen ist.

3. Multimedia-Bildschirm-Träger nach Anspruch 1 oder 2, **dadurch gekennzeichnet, dass** das Ständer (5) eine Rückseite hat, die mit dem Schlitten (3) durch eine Stütze (7) verbunden ist, die zwischen einer angehobenen Haltestellung und einer eingezogenen Verstaustellung zwischen dem Schlitten (3) und dem Ständer (5) in liegender Stellung verschiebbar ist.

4. Multimedia-Bildschirm-Träger nach einem der Ansprüche 1 bis 3, **dadurch gekennzeichnet, dass** die untere Randleiste (9) eine im Wesentlichen waagrechte Platte aufweist, die mit einem oberen Teil des Ständers (5) durch im Wesentlichen senkrechte Führungen (10) verbunden ist, die in im oberen Teil (8) ausgebildeten Fenstern (11) gleiten, wobei ein auskuppelbares Verriegelungssystem (12-14) vorgesehen ist, um die untere Randleiste (9) in ihrer oberen Stellung zu halten oder aus dieser zu lösen.

5. Multimedia-Bildschirm-Träger nach einem der Ansprüche 1 bis 4, **dadurch gekennzeichnet, dass** er seitliche Leisten (15) in der allgemeinen Form von zwei Flügeln aufweist, die bezüglich einer Vorderseite des Ständers (5) einen Vorsprung bilden, wobei diese Leisten (15) mit einem oberen Teil (8) des Ständers (5) durch Antriebseinrichtungen (16, 17) verbunden sind, die eine Verschiebung der Leisten (15) zwischen einer weg vom Ständer (5) gespreizten Konfiguration und einer angenäherten, gegen die Seitenränder des Ständers (5) angelegten Stellung ermöglichen, wobei die Antriebseinrichtungen (16, 17) außerdem ausgebildet sind, um kombinierte Verschiebungen einer Leiste (15) bezüglich der anderen durchzuführen.

6. Multimedia-Bildschirm-Träger nach Anspruch 5, **dadurch gekennzeichnet, dass** die Antriebseinrichtungen (16, 17) ein System mit Doppelzahnrädern (16) enthalten, die fest verbunden auf eine vom Ständer (5) getragene Drehachse (X1) montiert sind, wobei jedes Zahnrad (16) mit einer entsprechenden Zahnstange (17) zusammenwirkt, die starr mit der einen oder anderen der Leisten (15) verbunden ist, wobei die Anzahl von Zähnen der Zahnräder (16) für die eine und andere der Zahnstangen (17) unterschiedlich ist, so dass das Verhältnis (R) der von jeder der Leisten (15) zurückgelegten Strecken sich von 1 unterscheidet.

7. Multimedia-Bildschirm-Träger nach Anspruch 6, **dadurch gekennzeichnet, dass** das Verhältnis R zwischen 1,2 und 2 liegt, insbesondere ist R gleich 1,5, wobei das Verhältnis von der von den Leisten (15) zurückgelegten größten Strecke zur kleinsten Strecke betrachtet wird.

8. Multimedia-Bildschirm-Träger nach einem der vorhergehenden Ansprüche 4 bis 7, **dadurch gekennzeichnet, dass** er eine massive Wand (18) enthält, die die Randleiste (9) nach oben im Wesentlichen lotrecht zur Platte verlängert, wobei diese massive Wand (18) sich in den Körper des Ständers (5) einfügt, wenn die untere Randleiste (9) in der oberen Stellung ist, während sie sich aufdeckt, wenn die untere Randleiste (9) in der unteren Stellung ist.

9. Armaturenbrett eines Kraftfahrzeugs, **dadurch gekennzeichnet, dass** es einen Träger (1) eines Multimedia-Bildschirms nach einem der vorhergehenden Ansprüche enthält.

## Claims

1. Multimedia screen support, notably for an instrument panel of a motor vehicle, comprising a casing (2) in which a carriage (3) slides between a retracted position inside the casing (2) and a deployed position outside the casing (2), the carriage supports a stand (5) pivoted at its base between a position in which it is laid down against the carriage (3), allowing the carriage (3) and the stand (5) to be retracted into the casing, and a raised position for holding a multimedia screen bearing on a bottom ledge (9) of the stand (5), **characterized in that** the bottom ledge (9) also being movable relative to the base of the stand (5) pivoted on the carriage (3), between an upper position which frees space below the stand (5) and a lower position for lowering the position of a multimedia screen, notably in order to limit the extent to which it protrudes above the top edge of the stand (5).

2. Multimedia screen support according to Claim 1, **characterized in that** the casing (2) has an opening in the standardized "1 DIN" format.

3. Multimedia screen support according to Claim 1 or 2, **characterized in that** the stand (5) has a rear face connected to the carriage (3) by a stay (7) that can be moved between a raised holding position (Figures 2 and 3) and a retracted stowage position between the carriage (3) and the stand (5) in the laid-down position.

4. Multimedia screen support according to any of Claims 1 to 3, **characterized in that** the bottom ledge (9) has a substantially horizontal plate connected to a top part of the stand (5) by substantially vertical guides (10) sliding in apertures (11) formed in the top part (8), a disengageable locking system (12-14) being provided to keep the bottom ledge (9) in its upper position or to release it therefrom.

5. Multimedia screen support according to any of Claims 1 to 4, **characterized in that** it comprises lateral blocks (15) in the general shape of two fins projecting from a front face of the stand (5), these blocks (15) being connected to a top part (8) of the stand (5) by drive means (16, 17) enabling the blocks (15) to be moved between a separated configuration at a distance from the stand (5) to a closer configuration next to the lateral edges of the stand (5), the drive means (16, 17) also being designed to provide combined movements of one block (15) relative to the other.

6. Multimedia screen support according to Claim 5, **characterized in that** the drive means (16, 17) comprise a system having double pinions (16) mounted in a fixed way on a rotating shaft (X1) carried by the stand (5), each pinion (16) interacting with a corresponding rack (17) connected rigidly to one or other of the blocks (15), the number of teeth of the pinions (16) being different for one and the other of the racks (17) in such a way that the ratio (R) of the distances traveled by each of the blocks (15) is other than 1.

7. Multimedia screen support according to Claim 6, **characterized in that** the ratio R is in the range from 1.2 to 2, and notably R equals 1.5, the ratio being considered to be the ratio of the longest distance to the shortest distance traveled by the blocks (15).

8. Multimedia screen support according to any of the preceding Claims 4 to 7, **characterized in that** it comprises a solid wall (18) extending the bottom ledge (9) upward in a substantially perpendicular manner to the plate, this solid wall (18) being inserted into the body of the stand (5) when the bottom ledge (9) is in the upper position, while it is exposed when the bottom ledge (9) is in the lower position.

9. Instrument panel of a motor vehicle, **characterized in that** it comprises a multimedia screen support (1) according to any of the preceding claims.
